# EUROPEAN PATENT APPLICATION

(11) **EP 4 349 746 A1**
(43) Date of publication of application: **10.04.2024**
(21) Application number: 23195578.2
(22) Date of filing: 06.09.2023
(51) Int. Cl.: B65G 59/06, B65G 65/00

(54) **TRAY FEEDER**

(30) Priority: 06.10.2022 MY PI2022005556
(71) Applicant: Jabil Inc., St. Petersburg, FL 33716 (US)
(72) Inventor: Singh, Harpuneet, Dublin, CA, 94568 (US); Hu, Lei, 528511 Singapore (SG); Huang, Ying-Chieh, Jingzhou, Hubei, 433318 (CN); Hsieh, Wei-Hsiu, 505022 Lugang Town, Changhua Count (TW); Zheng, Xiao-Ting, Shanwei, Guangdong, 516600 (CN); Chu, Chien-Cheng, 420073 Taichung City (TW); Anil, Arya, 695006 Trivandrum, Kerala (IN); Chee, Li Yun, 760741 Singapore (SG)
(74) Representative: Gulde & Partner

(57) **Abstract**

A tray feeder includes a conveyor (2) and a lifting mechanism (3). The conveyor (2) is adapted for conveying a tray (1) to a discharge position. The lifting mechanism (3) includes a lifter (31) that supports the tray (1) and moves the tray (1) upwardly after the tray (1) is moved to the discharge position, and a pusher (32) that pushes the tray (1) in a transverse direction for positioning the tray (1) relative to the conveyor (2) in the transverse direction.

## Description

The disclosure relates to a conveying device, and more particularly to a tray feeder.

A conventional tray feeder includes a conveyor adapted to convey a tray that carries a plurality of assembly parts. After the tray is conveyed to a discharge position, the assembly parts are picked up, for example, by a robotic arm.

However, the conveyor of the conventional tray feeder merely supports lateral edge portions of the tray, leaving a central portion of the tray unsupported. If the tray is not strong enough, a force exerted by the robotic arm when the robotic arm picks up the assembly parts from the tray might bend the tray, and the assembly parts that remain on the tray might be in disorder as the tray is deformed.

In addition, relative movement between the tray and the conveyor in a transverse direction transverse to an advancing direction of the conveyor is not limited, so the tray may not be properly positioned in the transverse direction, and the robotic arm may be unable to properly pick up the assembly parts.

Therefore, an object of the disclosure is to provide a tray feeder that can alleviate at least one of the drawbacks of the prior art.

According to the disclosure, the tray feeder includes a conveyor and a lifting mechanism. The conveyor is adapted for conveying a tray to a discharge position. The lifting mechanism includes a lifter that supports the tray and moves the tray upwardly after the tray is moved to the discharge position, and a pusher that pushes the tray in a transverse direction for positioning the tray relative to the conveyor in the transverse direction.

Other features and advantages of the disclosure will become apparent in the following detailed description of the embodiment with reference to the accompanying drawings, of which:
Figure 1 is a perspective view illustrating an embodiment of a tray feeder according to the disclosure;
Figure 2 is a schematic side view illustrating a lifting mechanism of the embodiment;
Figure 3 is a schematic side view illustrating a platform and a pusher of the lifting mechanism;
Figure 4 is a schematic side view illustrating the platform moving a tray upwardly;
Figure 5 is a schematic side view illustrating the pusher pushing the tray toward a limiting member;
Figure 6 is a fragmentary perspective view illustrating a dispensing mechanism of the embodiment;
Figure 7 is a schematic side view illustrating a stage of the dispensing mechanism at a highest position;
Figure 8 is a schematic side view illustrating the stage at an intermediate position;
Figure 9 is a schematic side view illustrating latch members of the dispensing mechanism extending into a retaining space of the embodiment;
Figure 10 is a schematic side view illustrating the stage at a lowest position;
Figure 11 is a perspective view illustrating another example of the tray feeder according to the disclosure; and
Figure 12 is a perspective view illustrating a sensing unit of the tray feeder according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

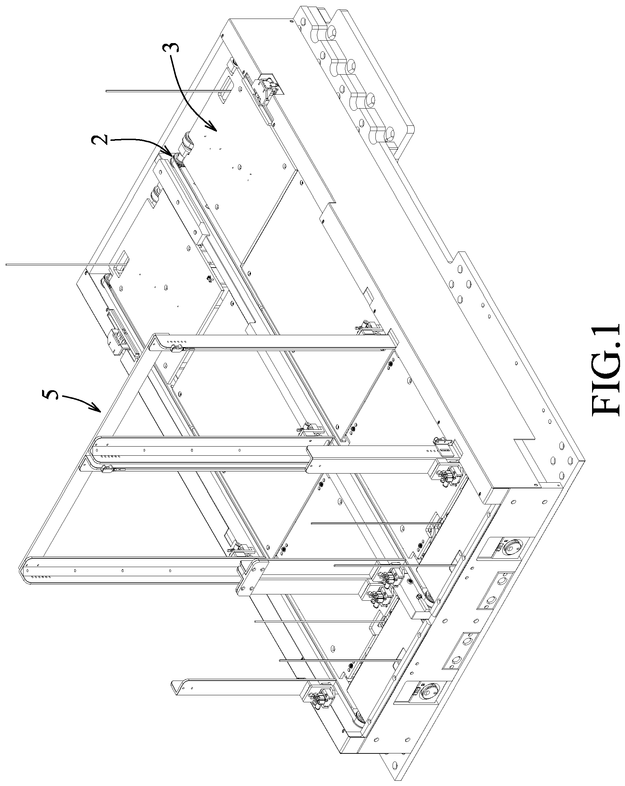

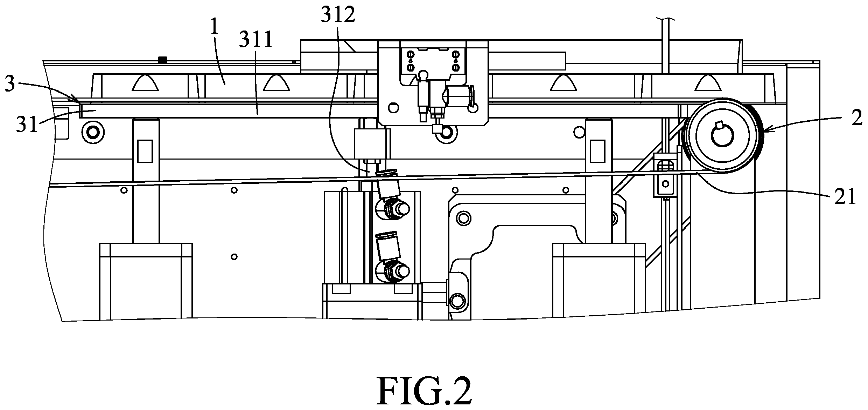

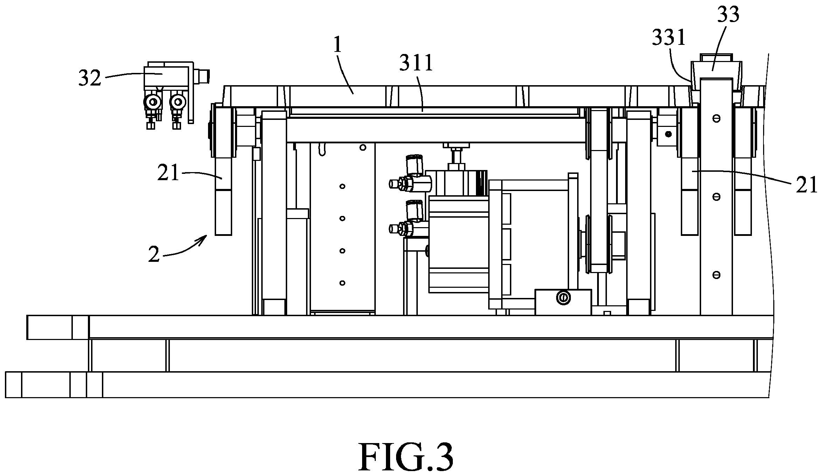

Referring to Figures 1 to 3, an embodiment of the tray feeder according to the disclosure is for conveying trays each carrying at least one assembly part, and includes a conveyor 2 and a lifting mechanism 3. The conveyor 2 conveys a tray 1 therealong. The lifting mechanism 3 is located on a conveying path of the conveyor 2, and includes a lifter 31, a pusher 32 and a limiting member 33. In one embodiment, the conveyor 2 includes two conveying belts 21 that are spaced apart from each other in a transverse direction transverse to the conveying direction of the conveyor 2. In one embodiment, the lifter 31 includes a platform 311, and a lifting actuator 312 that is connected to the platform 311 for moving the platform 311.

When the conveyor 2 conveys the tray 1, the platform 311 is spaced apart from the tray 1. When the tray 1 is conveyed by the conveyor 2 to a discharge position where the platform 311 is located under the tray 1, the conveyor 2 stops.

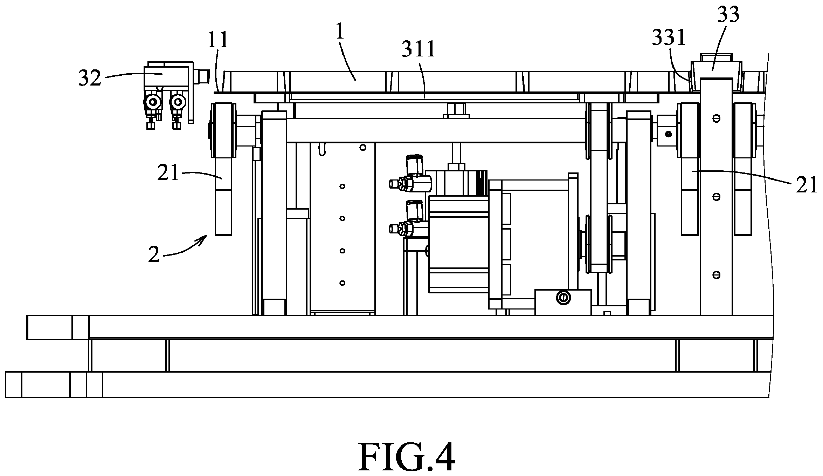

Referring to Figure 4, the platform 311 is then moved upwardly to support and move the tray 1, and to separate the tray 1 from the conveyor 2. In one embodiment, the limiting member 33 is located on the path of movement of the tray 1, and includes a guiding surface 331. During the upward movement of the tray 1 driven by the platform 311, the guiding surface 331 may push the tray 1 in the transverse direction. The tray 1 may have a bottom flange 11 that is adapted to abut against a bottom end of the limiting member 33 for limiting the upward movement of the tray 1. In one embodiment, the guiding surface 331 is an inclined surface that is oblique to an upright direction.

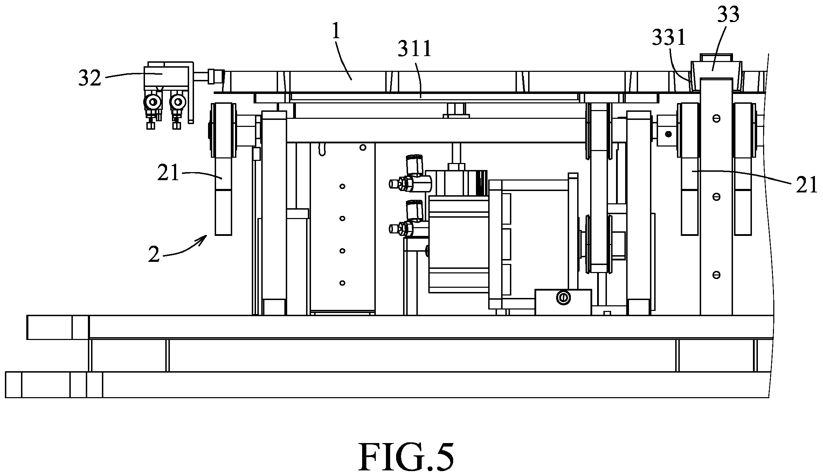

The pusher 32 and the limiting member 33 are respectively located at two opposite sides of the tray 1. Referring to Figure 5, after the tray 1 is separated from the conveyor 2 and supported by the platform 311, the pusher 32 pushes the tray toward the limiting member 33 so that the tray 1 is clamped between the pusher 32 and the limiting member 33 so as to be positioned relative to the conveyor 2. As such, a pick-up tool (not shown) is able to properly pick up the assembly part from the tray 1. After the tray 1 is discharged, the pusher 32 retracts, and the platform 311 is lowered to place the tray 1 on the conveyor 2.

By virtue of the platform 311 of the lifter 31 that supports the tray 1, even if the tray 1 is not strong enough, the tray 1 would not be bent by the pick-up tool when the pick-up tool picks up the assembly part from the tray 1. Moreover, by virtue of the pusher 32, the tray 1 can be properly positioned in the transverse direction, so that the pick-up tool is able to properly pick up the assembly part from the tray 1.

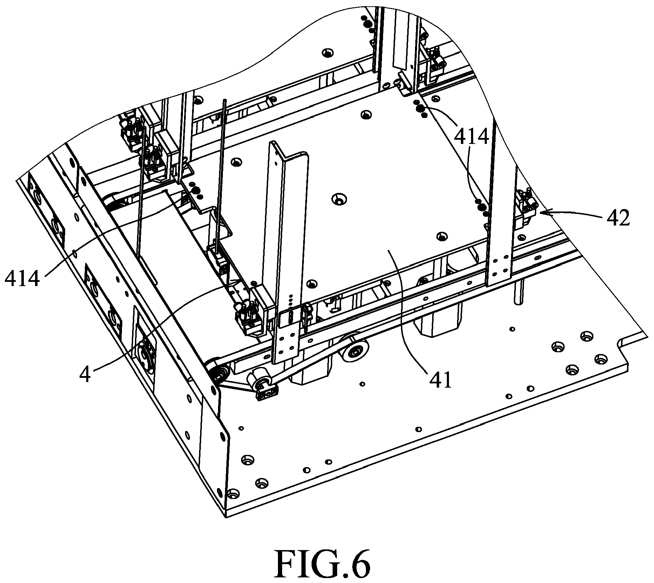

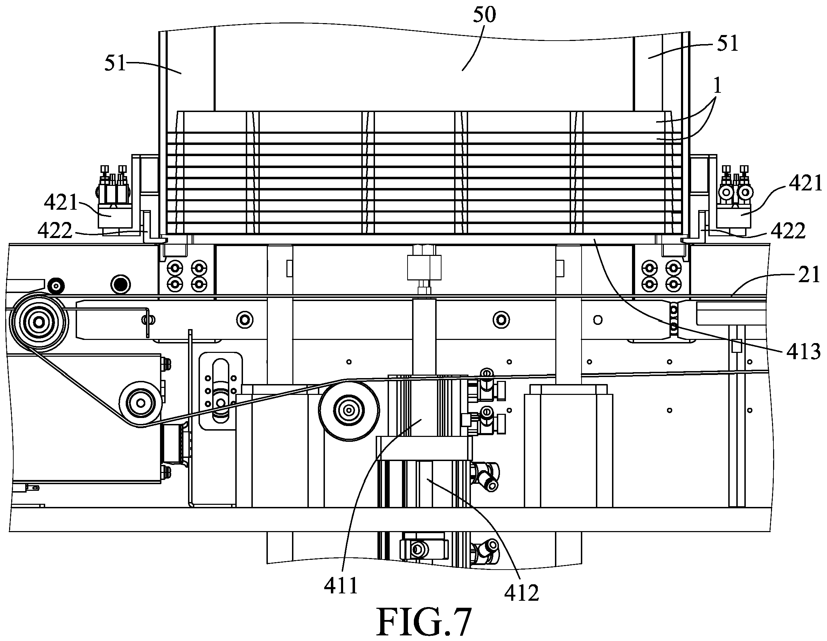

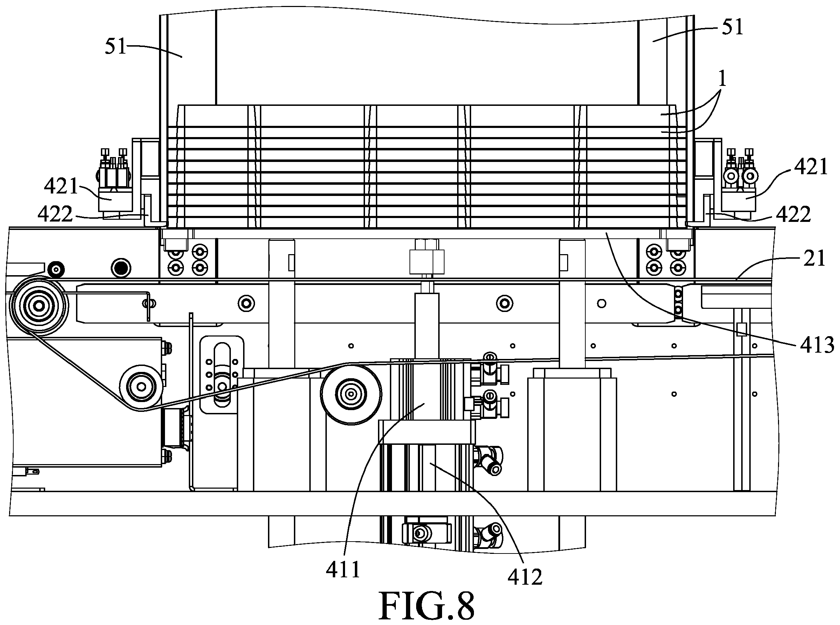

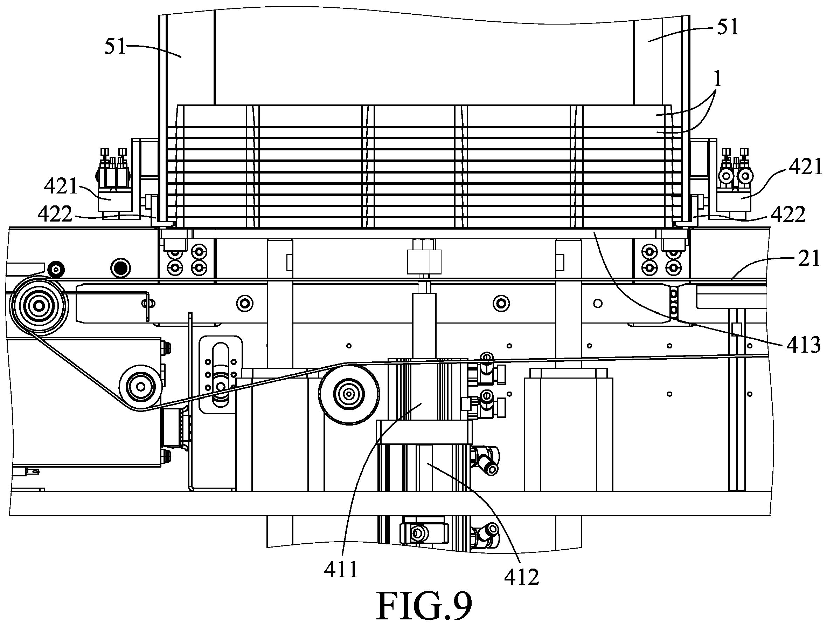

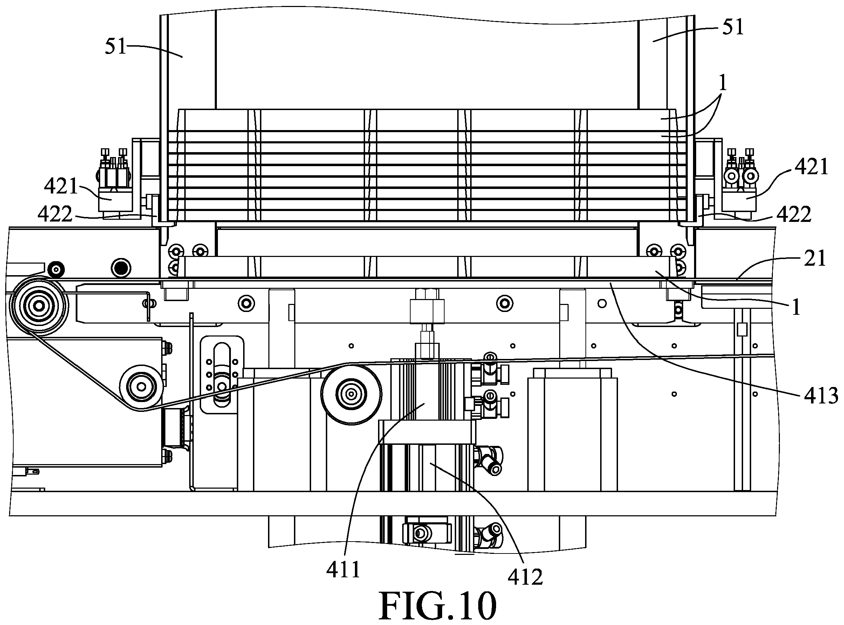

Referring to Figures 1, 6 and 7, the tray feeder may further include a dispensing mechanism 4 for dispensing a plurality of trays 1 one at a time, and a rack 5 for retaining the trays 1. The dispensing mechanism 4 includes a supporting unit 41 and a holding unit 42. In one embodiment, the supporting unit 41 includes a first cylinder 411, a second cylinder 412 and a stage 413. The first cylinder 411 and the second cylinder 412 are connected in series. The stage 413 is movable among a highest position (see Figure 7), an intermediate position (see Figures 8 and 9) and a lowest position (see Figure 10) by the first cylinder 411 and the second cylinder 412. In one embodiment, the holding unit 42 includes a plurality of holding cylinders 421, and a plurality of latch members 422 that are respectively connected to and driven by the holding cylinders 421. In one embodiment, the rack 5 includes a plurality of tray guides 51 that cooperatively define a retaining space 50 for retaining the trays 1.

Referring to Figure 7, at first, the stage 413 is at the highest position, and a plurality of trays 1 are stacked on one another in the retaining space 50, and are supported by the stage 413. The latch members 422 are retracted from the retaining space 50.

Referring to Figure 8, next, the stage 413 is lowered to the intermediate position, such that a bottom of the bottommost one of the trays 1 is located below the latch members 422.

Referring to Figure 9, the latch members 422 then extend into the retaining space 50 to be partially located under the second bottommost one of the trays 1 while the stage 413 is kept in the intermediate position.

Referring to Figure 10, afterwards, the stage 413 is moved to the lowest position to place the bottommost one of the trays 1 onto the conveyor 2 while the remaining trays 1 are supported by the latch members 422.

Another iteration may be performed by removing the latch members 422 from the retaining space 50 and by moving the stage 413 back to the highest position.

In one embodiment, the supporting unit 41 may include a plurality of vacuum suckers 414 that are disposed on the stage 413. The vacuum suckers 414 are turned on when the bottommost one of the trays 1 is lowered by the stage 413, and are turned off after the bottommost one of the trays 1 is placed on the conveyor 2.

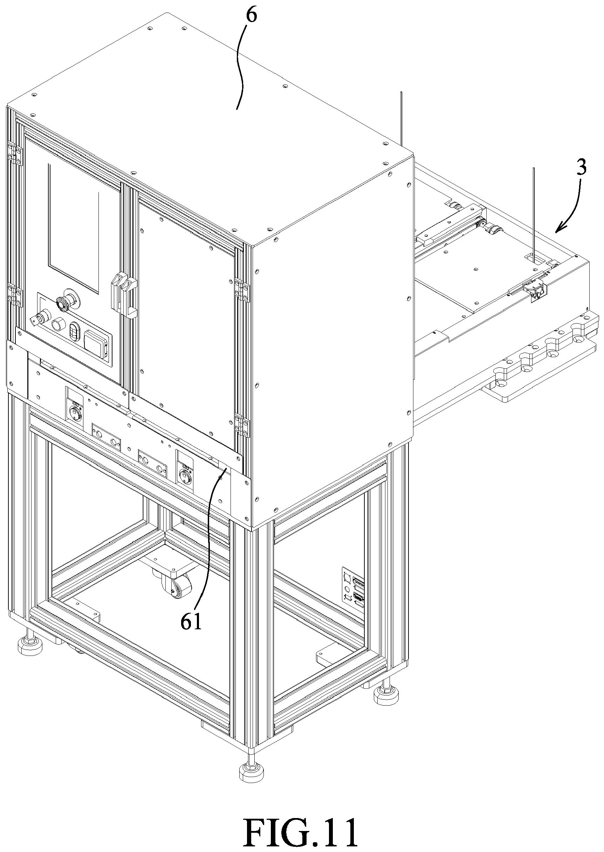

Referring further to Figure 11, in one embodiment, the tray feeder may further include an enclosure 6 that encloses the dispensing mechanism 4 and the rack 5. The enclosure 6 has an opening 61 at one side thereof distal from the lifting mechanism 3. A tray is moved out of the tray feeder by the conveyor 2 via the opening 61 after the assembly part thereon is discharged.

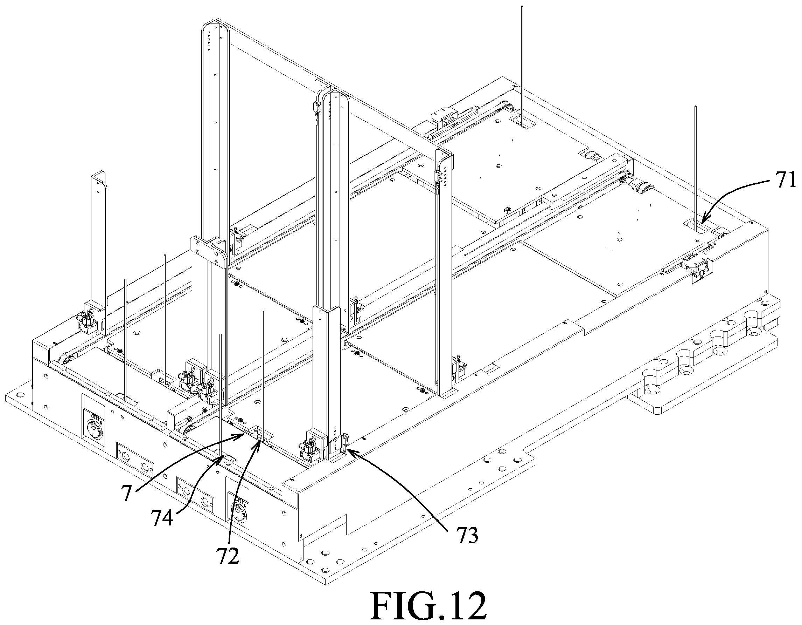

Referring further to Figure 12, in one embodiment, the tray feeder may further include a sensing unit 7. The sensing unit includes a first sensor 71, a second sensor 72, a third sensor 73 and a fourth sensor 74. The first sensor 71 detects the presence of the tray at the discharge position. The second sensor 72 detects the presence of the lowest tray in the rack 5. The third sensor 73 detects that whether or not the number of the trays stacked in the rack 5 is still sufficient. The fourth sensor 74 detects the presence of the tray that is moved out of the tray feeder.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A tray feeder comprising:
a conveyor (2) adapted for conveying a tray (1) to a discharge position;
the tray feeder being **characterized by**
a lifting mechanism (3) that includes
a lifter (31) adapted to support the tray (1) and move the tray (1) upwardly after the tray (1) is moved to the discharge position, and
a pusher (32) adapted to push the tray (1) in a transverse direction for positioning the tray (1) relative to the conveyor (2) in the transverse direction.

2. The tray feeder as claimed in claim 1, wherein the lifting mechanism (3) further includes a limiting member (33), the pusher (32) and the limiting member (33) being respectively located at two opposite sides of the tray (1), the limiting member (33) including a guiding surface (331), during the upward movement of the tray (1) driven by the platform (311), the guiding surface (331) pushing the tray (1) in the transverse direction.

3. The tray feeder as claimed in claim 2, wherein the guiding surface (331) of the limiting member (33) is configured as an inclined surface.

4. The tray feeder as claimed in claim 2, wherein the lifter (31) includes a platform (311), and a lifting actuator (312) that is connected to the platform (311) for moving the platform (311), the platform (311) being able to be moved upwardly to support the tray (1).

5. The tray feeder as claimed in claim 1, the tray (1) having a bottom flange (11), wherein a bottom end of the limiting member (33) is adapted to abut against the bottom flange (11) of the tray (1) for limiting the upward movement of the tray (1).

6. The tray feeder as claimed in claim 1, further comprising a dispensing mechanism (4) and a rack (5), the dispensing mechanism (4) including a supporting unit (41), the supporting unit (41) including a stage (413) that operable to be raised and lowered, the rack (5) including a plurality of tray guides (51) that cooperatively define a retaining space (50) for retaining a plurality of trays (1), the stage (413) being operable to support a bottommost one of the trays (1) in the retaining space (50), and to place the bottommost one of the trays (1) in the retaining space (50) onto the conveyor (2).

7. The tray feeder as claimed in claim 6, wherein the dispensing mechanism (4) further includes a holding unit (42), the holding unit (42) including a plurality of holding cylinders (421), and a plurality of latch members (422) that are respectively connected to and driven by the holding cylinders (421), the latch members (422) being operable to extend into or be retracted from the retaining space (50) .

8. The tray feeder as claimed in claim 7, wherein the latch members (422) extend into the retaining space (50) to support the second bottommost one of the trays (1) in the retaining space (50) when the bottommost one of the trays (1) in the retaining space (50) is placed onto the conveyor (2) by the stage (413).

9. The tray feeder as claimed in claim 8, wherein the stage (413) is movable among a highest position, an intermediate position and a lowest position, the stage (413) supporting all of the trays (1) in the retaining space (50) when at the highest position, the bottommost one of the trays (1) in the retaining space (50) being located below the latch members (422) when the stage (413) is at the intermediate position, such that the latch members (422) are operable to extend into the retaining space (50) to support the second bottommost one of the trays (1) in the retaining space (50), the bottommost one of the trays (1) in the retaining space (50) being placed onto the conveyor (2) when the stage (413) is at the lowest position.

10. The tray feeder as claimed in claim 6, wherein the supporting unit (41) further includes a plurality of vacuum suckers (414) that are disposed on the stage (413), the vacuum suckers (414) being turned on when the bottommost one of the trays (1) in the retaining space (50) is moved by the stage (413).

11. The tray feeder as claimed in claim 6, further comprising an enclosure (6) that encloses the dispensing mechanism (4) and the rack (5), the enclosure (6) having an opening (61) at one side thereof distal from the lifting mechanism (3), a tray is moved out of the tray feeder by the conveyor (2) via the opening (61).

12. The tray feeder as claimed in claim 6, further comprising a sensing unit (7), the sensing unit (7) including a first sensor (71) and a second sensor (72), the first sensor (71) detecting presence of a tray at the discharge position, the second sensor (72) detecting presence of a lowest tray in the rack (5) .

13. The tray feeder as claimed in claim 12, wherein the sensing unit (7) further includes a third sensor (73) and a fourth sensor (74), the third sensor (73) detecting that whether or not the number of the trays stacked in the rack (5) is still sufficient, the fourth sensor (74) detecting presence of a tray that is moved out of the tray feeder.
